# EUROPÄISCHE PATENTSCHRIFT

(11) **EP 1 997 721 B1**
(45) Veröffentlichungstag und Bekanntmachung des Hinweises auf die Patenterteilung: **28.08.2013**
(21) Anmeldenummer: 08009875.9
(22) Anmeldetag: 30.05.2008
(51) Int. Cl.: B62D 29/00, B62D 21/15, B62D 25/04

(54) **Faserverbundwerkstoffprofil und Kraftfahrzeugscheibenrahmen**
Fibre compound material profile and motor vehicle panel frame
Profilé en matière composite fibreuse et cadre de vitre de véhicule automobile

(30) Priorität: 01.06.2007 DE 102007025632
(43) Veröffentlichungstag der Anmeldung: 03.12.2008
(73) Patentinhaber: AUDI AG, 85045 Ingolstadt (DE)
(72) Erfinder: Schneidewind, Thomas, 89312 Günzburg (DE); Gerbrand, Jürgen, 71737 Kirchberg (DE); Durst, Karl, 91790 Thalmannsfeld (DE)
(74) Vertreter: Patzelt, Heike Anna Maria

(56) Entgegenhaltungen:
- WO-A-02/12053
- WO-A-2004/098820

## Beschreibung

Die Erfindung betrifft einen Scheibenrahmen für ein Kraftfahrzeug.

Aus dem Stand der Technik ist der Einsatz von Stahl als Werkstoff im Karosseriebau insbesondere für Kraftfahrzeugscheibenrahmen bekannt. Um eine Zunahme des Fahrzeuggewichts in Folge höherer Sicherheitsanforderungen bezüglich der Steifigkeit der Fahrgastzellen von Kraftfahrzeugen und ihre Deformationseigenschaften verhindern zu können, werden in bekannter Weise Leichtbauwerkstoffe, wie zum Beispiel Aluminium, als Werkstoffe für Kraftfahrzeugscheibenrahmen verwendet. Sowohl Stahl als auch Aluminium ermöglichen als Werkstoffe für den Kraftfahrzeugscheibenrahmen eine hohe Bruchdehnung ohne Versagen der Struktur, so dass insbesondere ein seitlicher Fahrzeugscheibenrahmen Kräfte aufnehmen und auf untere Karosseriestrukturen weiterleiten kann, die bei einem Unfall auf das Fahrzeugdach wirken können. Dies erhöht die Widerstandsfähigkeit des Fahrzeugdaches gegen Eindrückung.

Zudem ist der Einsatz von Faserverbundwerkstoffen als Leichtbauwerkstoffe aus dem Stand der Technik bekannt, die beispielsweise mit einem so genannten RTM-Verfahren (RTM: Resin Transfer Moulding bzw. Harz-Injektionsverfahren) hergestellt werden. Die Verstärkungsfasern können beispielsweise als Gewebe, Gewirke, Vliese, Gitter Matten usw. ausgeführt sein, die beispielsweise aus Glas-, Kunststoff-, Natur- und/oder Kohlefasern hergestellt sind. Für Sandwich-Konstruktionen können Kernwerkstoffe wie Polyurethanschaum, PVC-Schaum, Balsaholz usw. verwendet werden. Neben den verschiedenen Verstärkungsfaserwerkstoffen und Sandwichwerkstoffen können beim RTM-Verfahren auch unterschiedliche Harzsysteme, wie z.B. Polyester-, Venylester-, Epoxid- oder Phenol-Harze, verwendet werden. Das RTM-Verfahren ermöglicht insbesondere die Herstellung von Teilen mit einer komplexen Geometrie.

In der Gebrauchsmusterschrift DE 299 24 726 U1 wird ein Verbundbauteil für Fahrzeugkarosserien beschrieben. Das beschriebene Verbundbauteil definiert abschnittsweise die Außenfläche des Fahrzeugs und ist insbesondere als großflächiges Verbundbauteil in Form eines Fahrzeugdachs, einer Tür, einer Klappe oder eines Deckels ausgeführt. Das beschriebene Verbundbauteil umfasst eine vor dem Schäumen separat tiefgezogene Außenhaut und eine auf der Innenseite der Außenhaut aufgeschäumte Kunststoffschicht.

Die tiefgezogene Außenhaut ist an den Rändern rahmenlos ausgebildet und mit einer umlaufenden Aufkantung versehen. Zudem ist über den gesamten Flächenbereich der Außenhaut eine an sich nicht steife Armierung aus ungeordneten Fasern, insbesondere Glasfasern, vorgesehen, mit denen der Kunststoff beladen ist, wobei die ungeordneten Fasern den Elastizitätsmodul der geschäumten Kunststoffschicht erhöhen. Die Armierung umfasst beispielsweise nichteigensteife bzw. biegeschlaffe Gewebe, Gewirke, Vliese, Gitter Matten usw., die beispielsweise aus Glas-, Kunststoff- und/oder Kohlefasern hergestellt sind.

In der Offenlegungsschrift WO 02/12053 wird ein Scheibenrahmen für ein Kraftfahrzeug beschrieben, welcher zwei als Faserverbundwerkstoffprofile ausgeführte A-Säulen umfasst, welche jeweils in einer Harzmasse gelagert und fixiert sind, welche in einem Hohlraum einer Aufnahmestruktur des Kraftfahrzeugs angeordnet ist. Die beiden A-Säulen sind jeweils von einem als hohles gewelltes Rohr ausgeführten Verkleidungsteil umgeben, welches bei einem Aufprall des Kopfes eines Insassen verformt wird, um ein direktes Auftreffen des Kopfes auf den A-Säulen bzw. den Scheibenrahmen zu verhindern.

In der Offenlegungsschrift WO 2004/098820 A1 werden deformierbare Elemente beschrieben, die aus Verbundwerkstoffen hergestellt werden. Die beschriebenen deformierbaren Verbundwerkstoffelemente werden als Crashelemente in Fahrzeugen eingesetzt. Für den Einsatz als Seitenaufprallschutzelement weist ein solches Verbundwerkstoffelement an seinen Enden an mindestens einer Seite jeweils mindestens ein Paar von definierten äußeren Sollfehlstellen auf, durch die bei einer im Wesentlichen senkrecht zur Längsachse erfolgenden Krafteinwirkung eine Gesamtverformung des Verbundwerkstoffelements in Form einer parallelen Verschiebung des zwischen den mindestens zwei Sollfehlstellenpaaren angeordneten Abschnitts des Verbundwerkstoffelements vorgegeben wird. Hierbei wird die Verformung des Verbundwerkstoffelements so vorgegeben, dass die senkrecht zur Längsachse des Verbundwerkstoffelements einwirkende Crashenergie bei einem Seitenaufprall aufgenommen und abgebaut wird.

Bei einem möglichen Einsatz von Faserverbundwerkstoffen als Werkstoffe für Kraftfahrzeugscheibenrahmen, die insbesondere mit Kohlenstofffasern verstärkt sind, ergibt sich das Problem, dass aufgrund der geringeren Bruchdehnung dieser Werkstoffe bei der Aufnahme und Weiterleitung der bei einem Unfall auf das Fahrzeugdach wirkenden Kräfte ein Versagen der Struktur früher als gefordert auftreten kann.

Aufgabe der Erfindung ist es, einen Kraftfahrzeugscheibenrahmen anzugeben, der ein geringes Gewicht und eine ausreichende Bruchdehnung aufweist und kostengünstig hergestellt werden kann.

Die Erfindung löst diese Aufgabe durch Bereitstellung eines Scheibenrahmens für ein Kraftfahrzeug mit den Merkmalen des Patentanspruchs 1.

Vorteilhafte Ausführungsformen und Weiterbildungen der Erfindung sind in den abhängigen Ansprüchen angegeben.

Ein erfindungsgemäßer Scheibenrahmen für ein Kraftfahrzeug umfasst mindestens ein Faserverbundwerkstoffprofil, das beispielsweise als seitlicher Scheibenrahmen ausgeführt ist, wobei die auf den seitlichen Scheibenrahmen wirkende Kraft beispielsweise durch einen Überschlag des Fahrzeugs bei einem Unfall verursacht wird. Das mindestens eine Faserverbundwerkstoffprofil kann beispielsweise so ausgerichtet bzw. angeordnet werden, dass es eine maximale Bruchdehnung gegen eine zu erwartende Krafteinwirkung bei einem Unfall aufweist.

Erfindungsgemäß weist ein Faserverbundwerkstoffprofil an mindestens einer Seite mindestens eine definierte äußere Sollfehlstelle auf, durch die bei einer Krafteinwirkung eine Gesamtverformung des Faserverbundwerkstoffprofils vorgebbar ist. Durch die Einbringung von mindestens einer definierten äußeren Sollfehlstelle an einer Seite des Faserverbundwerkstoffprofils, wird diese im Falle einer Biegebelastung definiert versagen, wodurch die Gesamtverformbarkeit des Faserverbundwerkstoffprofils in vorteilhafter Weise zunimmt. Durch die Blockbildung im Bruchbereich der mindestens einen äußeren Sollfehlstelle wird sichergestellt, dass das maximale Kraftniveau erhöht wird, welches das Faserverbundwerkstoffprofil aufnehmen und ohne Versagen der Struktur weiterleiten kann.

Erfindungsgemäß wird die gewünschte Gesamtverformung des Faserverbundwerkstoffprofils über einen Kraft-Weg-Verlauf eingestellt. Der Kraft-Weg-Verlauf wird durch Variieren der Geometrie der definierten äußeren Sollfehlstellen und/oder der Abstände der definierten äußeren Sollfehlstellen vorgegeben.

Durch die vorliegende Erfindung können Faserverbundwerkstoffprofile so dimensioniert werden, dass in vorteilhafter Weise eine ausreichende Bruchdehnung erreicht werden kann. Das Faserverbundwerkstoffprofil kann beispielsweise als geschlossenes Hohlprofil ausgeführt werden.

Durch den erfindungsgemäßen Einsatz des Faserverbundwerkstoffprofils als Scheibenrahmen für ein Kraftfahrzeug können in vorteilhafter Weise ein geringeres Fahrzeuggewicht und dadurch ein tieferer Fahrzeugschwerpunkt erzielt werden, wodurch das Fahrverhalten bei gleich bleibendem hohen Insassenschutz verbessert werden kann. Zudem ermöglicht die erfindungsgemäße Verwendung des Faserverbundwerkstoffprofils als Scheibenrahmen eine dünnere Ausführung der A-Säule, wodurch der Sichtwinkel in vorteilhafter Weise verbessert wird. Zudem ergeben sich durch die erfindungsgemäße Verwendung des Faserverbundwerkstoffprofils geringere Herstellungskosten und eine größere Designfreiheit.

In Ausgestaltung des erfindungsgemäßen Scheibenrahmens ist die mindestens eine definierte äußere Sollfehlstelle als Sicke bzw. Vertiefung ausgeführt. Zudem kann das Faserverbundwerkstoffprofil in Abhängigkeit von der zu erwartenden Krafteinwirkung an zwei Seiten definierte äußere Sollfehlstellen aufweisen.

Der Kraft-Weg-Verlauf kann beispielsweise durch Variieren der Wandstärke des Faserverbundwerkstoffprofils und/oder der Faserorientierung angepasst werden.

Vorteilhafte Ausführungsformen der Erfindung sind in den Zeichnungen dargestellt und werden nachfolgend beschrieben.

Dabei zeigen:
- Fig. 1: eine schematische Darstellung eines erfindungsgemäßen seitlichen Scheibenrahmens für ein Kraftfahrzeug,
- Fig. 2: eine schematische Schnittdarstellung eines erfindungsgemäßen Faserverbundwerkstoffprofils für den Scheibenrahmen aus Fig. 1, und
- Fig. 3: eine schematische Schnittdarstellung des erfindungsgemäßen Faserverbundwerkstoffprofils gemäß Fig. 1 nach einer Krafteinwirkung.

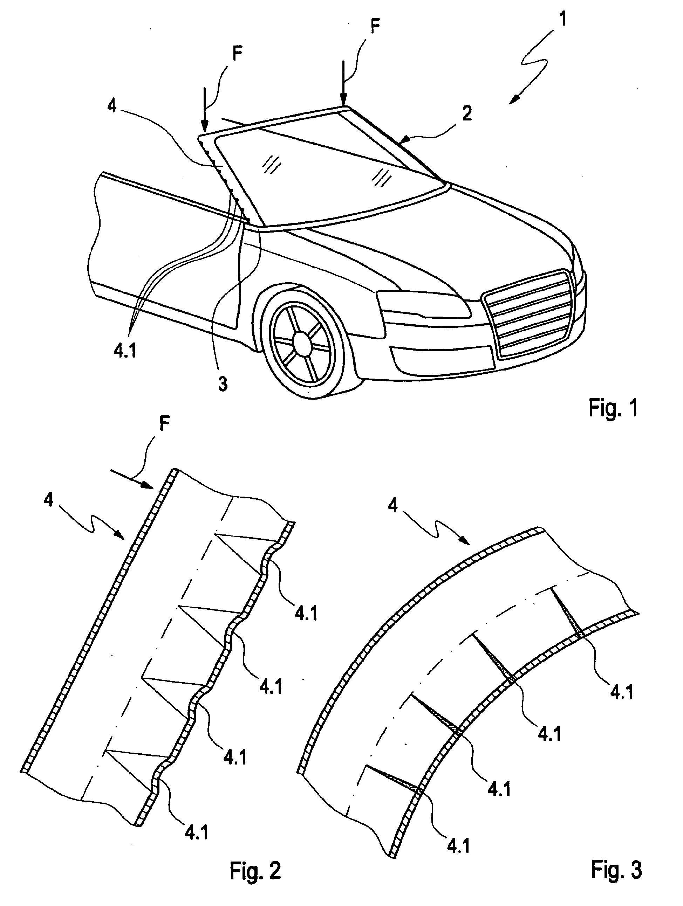

Wie aus Fig. 1 ersichtlich ist, wird ein erfindungsgemäßes Faserverbundwerkstoffprofil 4 im dargestellten Ausführungsbeispiel als vorderer seitlicher Scheibenrahmen 2 bzw. als A-Säule für ein Kraftfahrzeug 1 verwendet, das beispielhaft als Cabriolet ausgeführt ist. Das Faserverbundwerkstoffprofil 4 ist als geschlossenes Hohlprofil ausgeführt und so dimensioniert, dass es eine ausreichende Bruchdehnung aufweist, um im Falle eines Überschlags bei einem Unfall die entstehenden Kräfte F ohne Versagen der Struktur, d.h. ohne Bruch, aufzunehmen bzw. an eine untere Karosseriestruktur 3 weiterzuleiten.

Wie aus Fig. 2 und 3 ersichtlich ist, weist das Faserverbundwerkstoffprofil 4 an einer Seite mehrere definierte äußere Sollfehlstellen 4.1 auf, die im dargestellten Ausführungsbeispiel als Sicken bzw. Vertiefungen ausgeführt sind. Die Sicken weisen jeweils eine vorgegebene Geometrie und vorgegebene Abständen zueinander auf, um im Falle einer Biegebelastung definiert zu versagen. Dadurch kann bei einer Krafteinwirkung F eine gewünschte Gesamtverformung des Faserverbundwerkstoffprofils 4 vorgegeben werden, die beispielhaft in Fig. 3 dargestellt ist. Zusätzlich kann der Kraft-Weg-Verlauf des Faserverbundwerkstoffprofils 4 bei einer Biegebelastung durch Variieren der Wandstärke und/oder der Faserorientierung angepasst werden. Wie aus Fig. 3 ersichtlich ist, ergibt sich durch die definierten äußeren Sollfehlstellen 4.1 bei einer. Belastung des Faserverbundwerkstoffprofils 4 mit der Kraft F im Bruchbereich der definierten äußeren Sollfehlstellen 4.1 eine Blockbildung, durch welche ein Kraft-Weg-Verlauf und damit die Gesamtverformung des Faserverbundwerkstoffprofils 4 vorgegeben werden kann.

Bei einer alternativen nicht dargestellten Ausführungsform des erfindungsgemäßen Faserverbundwerkstoffprofils 4 sind in Abhängigkeit von der zu erwartenden Krafteinwirkung F an zwei Seiten des Faserverbundwerkstoffprofils 4 definierte äußere Sollfehlstellen angeordnet.

Durch das erfindungsgemäße Faserverbundwerkstoffprofil kann bei dessen Verwendung als Scheibenrahmen die Widerstandsfähigkeit des Fahrzeugdaches gegen Eindrückung erhöht werden, so dass bei Crashtests ohne Versagen der Struktur vergleichbare Werte wie bei der Verwendung von Stahl und/oder Aluminium als Werkstoff für den Scheibenrahmen erzielt werden können.

Somit kann durch den Einsatz des erfindungsgemäßen Faserverbundwerkstoffprofils als Scheibenrahmen für ein Kraftfahrzeug das Fahrzeuggewicht in vorteilhafter Weise bei gleich bleibendem hohen Insassenschutz weiter verringert werden. Das geringere Fahrzeuggewicht ergibt einen tieferen Fahrzeugschwerpunkt und ermöglicht eine Verbesserung des Fahrverhaltens. Zudem kann der Schreibenrahmen bzw. die A-Säule durch die Verwendung des erfindungsgemäßen Faserverbundwerkstoffprofils dünner ausgeführt werden, wodurch der Sichtwinkel in vorteilhafter Weise verbessert wird.

### BEZUGSZEICHENLISTE

- 1: Kraftfahrzeug
- 2: Scheibenrahmen
- 3: untere Karosseriestruktur
- 4: Faserverbundwerkstoffprofil
- 4.1: Sollfehlstelle
- F: Kraftwirkung

## Patentansprüche

1. Scheibenrahmen für ein Kraftfahrzeug (1) mit mindestens einem Faserverbundwerkstoffprofil (4), **dadurch gekennzeichnet, dass** das mindestens eine Faserverbundwerkstoffprofil (4) an mindestens einer Seite mindestens eine definierte äußere Sollfehlstelle (4.1) aufweist, durch die bei einer Krafteinwirkung (F) in Form einer Biegebelastung eine Gesamtverformung des Faserverbundwerkstoffprofils (4) über einen Kraft-Weg-Verlauf einstellbar ist, wobei der Kraft-Weg-Verlauf durch Variieren der Geometrie der definierten äußeren Sollfehlstellen (4.1) und/oder der Abstände der definierten äußeren Sollfehlstellen (4.1) vorgebbar ist.

2. Scheibenrahmen nach Anspruch 1, **dadurch gekennzeichnet, dass** das mindestens eine Faserverbundwerkstoffprofil (4) so ausgerichtet ist, dass es eine maximale Bruchdehnung gegen eine zu erwartende Krafteinwirkung (F) aufweist.

3. Scheibenrahmen nach Anspruch 1 oder 2, **dadurch gekennzeichnet, dass** die mindestens eine definierte äußere Sollfehlstelle (4.1) als Sicke ausgeführt ist.

4. Scheibenrahmen nach einem der Ansprüche 1 bis 3, **dadurch gekennzeichnet, dass** das Faserverbundwerkstoffprofil (4) in Abhängigkeit von der zu erwartenden Krafteinwirkung (F) an zwei Seiten mindestens eine definierte äußere Sollfehlstelle (4.1) aufweist.

5. Scheibenrahmen nach einem der Ansprüche 1 bis 4, **dadurch gekennzeichnet, dass** der Kraft-Weg-Verlauf durch Variieren der Wandstärke des Faserverbundwerkstoffprofils (4) und/oder der Faserorientierung anpassbar ist.

6. Scheibenrahmen nach einem der Ansprüche 1 bis 5, **dadurch gekennzeichnet, dass** das Faserverbundwerkstoffprofil (4) als geschlossenes Hohlprofil ausgeführt ist.

## Claims

1. Pane frame for a motor vehicle (1) comprising at least one fibre composite material profile (4), **characterised in that** the at least one fibre composite material profile (4) has on at least one side at least one defined outer intended discontinuity (4.1), by means of which an overall deformation of the fibre composite material profile (4) can be adjusted over a force/displacement course in the event of a dynamic effect (F) in the form of a flexural loading, it being possible to predetermine the force/displacement course by varying the geometry of the defined outer intended discontinuities (4.1) and/or the spacings of the defined outer intended discontinuities (4.1).

2. Pane frame according to claim 1, **characterised in that** the at least one fibre composite material profile (4) is designed to have a maximum breaking elongation against an anticipated dynamic effect (F).

3. Pane frame according to either claim 1 or claim 2, **characterised in that** the at least one defined outer intended discontinuity (4.1) is constructed as a seam.

4. Pane frame according to any of claims 1 to 3, **characterised in that**, according to the anticipated dynamic effect (F), the fibre composite material profile (4) has at least one defined outer discontinuity (4.1) on two sides.

5. Pane frame according to any of claims 1 to 4, **characterised in that** the force/displacement course can be adapted by varying the wall thickness of the fibre composite material profile (4) and/or the fibre orientation.

6. Pane frame according to any of claims 1 to 5, **characterised in that** the fibre composite material profile (4) is constructed as a closed hollow profile.

## Revendications

1. Cadre de vitre pour un véhicule automobile (1) comprenant au moins un profilé en matériau composite renforcé par des fibres (4), **caractérisé en ce que** l'au moins un profilé en matériau composite renforcé par des fibres (4) présente, au niveau au moins d'un côté, au moins un défaut théorique (4.1) extérieur défini, par lequel une déformation globale du profilé en matériau composite renforcé par des fibres (4) peut être ajustée sur une courbe force-parcours lors de l'action d'une force (F) sous la forme d'une contrainte de flexion, où la courbe force-parcours peut être prédéfinie par la variation de la géométrie des défauts théoriques (4.1) extérieurs définis et/ou des distances entre les défauts théoriques (4.1) extérieurs définis.

2. Cadre de vitre selon la revendication 1, **caractérisé en ce que** l'au moins un profilé en matériau composite renforcé par des fibres (4) est orienté de telle manière qu'il présente un allongement maximal à la rupture à l'encontre de l'action d'une force (F) à attendre.

3. Cadre de vitre selon la revendication 1 ou 2, **caractérisé en ce que** l'au moins un défaut théorique (4.1) extérieur défini est réalisé sous la forme d'une moulure.

4. Cadre de vitre selon l'une quelconque des revendications 1 à 3, **caractérisé en ce que** le profilé en matériau composite renforcé par des fibres (4) présente en fonction de l'action de force (F) à attendre, au niveau de deux côtés, au moins un défaut théorique (4.1) extérieur défini.

5. Cadre de vitre selon l'une quelconque des revendications 1 à 4, **caractérisé en ce que** la courbe force-parcours peut être adaptée en faisant varier l'épaisseur du profilé en matériau composite renforcé par des fibres (4) et/ou l'orientation des fibres.

6. Cadre de vitre selon l'une quelconque des revendications 1 à 5, **caractérisé en ce que** le profilé en matériau composite renforcé par des fibres (4) est réalisé sous la forme d'un profilé creux fermé.
